(19) Europäisches Patentamt
European Patent Office
Office européen des brevets

(11) EP 2 652 015 B1

(12) **FASCICULE DE BREVET EUROPEEN**

(45) Date de publication et mention de la délivrance du brevet:
**15.11.2017 Bulletin 2017/46**

(21) Numéro de dépôt: **11791598.3**

(22) Date de dépôt: **09.12.2011**

(51) Int Cl.:
***C08J 3/22*** (2006.01) ***C08J 3/215*** (2006.01)
***C08K 3/04*** (2006.01)

(86) Numéro de dépôt international:
**PCT/EP2011/072287**

(87) Numéro de publication internationale:
**WO 2012/080109 (21.06.2012 Gazette 2012/25)**

(54) **COMPOSITION ELASTOMERIQUE PRESENTANT UNE BONNE DISPERSION DE LA CHARGE DANS LA MATRICE ELASTOMERIQUE**

ELASTOMERE ZUSAMMENSETZUNG MIT GUTER DISPERSION DES ZUSCHLAGSTOFFES IN DER ELASTOMEREN MATRIX

ELASTOMERIC COMPOSITION EXHIBITING GOOD DISPERSION OF THE FILLER IN THE ELASTOMERIC MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2010 FR 1060687**

(43) Date de publication de la demande:
**23.10.2013 Bulletin 2013/43**

(73) Titulaire: **Compagnie Générale des Etablissements Michelin**
**63000 Clermont-Ferrand (FR)**

(72) Inventeurs:
- **THOMASSON, Damien**
  **F-63040 Clermont-Ferrand Cedex 9 (FR)**
- **SEVIGNON, Marc**
  **F-63040 Clermont-Ferrand Cedex 9 (FR)**

(74) Mandataire: **Cohen, Sylvia**
**M.F.P. MICHELIN**
**23, place des Carmes Déchaux**
**SGD/LG/PI - F35 - Ladoux**
**63040 Clermont-Ferrand Cedex 9 (FR)**

(56) Documents cités:
**EP-A1- 1 873 191** **DE-A1- 10 024 613**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 652 015 B1

**Description**

L'invention concerne 'une composition de caoutchouc à base d'au moins une charge inorganique, en particulier la silice, et d'un mélange-maître à base d'un élastomère diénique et de noir de carbone, le dit mélange maître présentant une très bonne dispersion du noir de carbone dans la matrice élastomérique et la composition présentant une bonne dispersion de l'ensemble de sa charge de la composition dans sa matrice élastomérique. On entend par « mélange-maître » (couramment désigné par son nom anglais « masterbatch »): un composite à base d'élastomère dans lequel a été introduite une charge et éventuellement d'autres additifs.

La présente invention se rapporte en particulier à l'utilisation d'un tel mélange-maître pour la fabrication de compositions de caoutchoucs diéniques renforcées d'un coupage de charge organique et de charge inorganique, destinées à la fabrication de pneumatiques ou de produits semi-finis pour pneumatiques, en particulier de bandes de roulement de ces pneumatiques.

Pour obtenir les propriétés de renforcement et d'hystérèse optimales conférées par une charge dans une bande de roulement de pneumatique et ainsi une haute résistance à l'usure et une basse résistance au roulement, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées au moins partiellement de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Cependant, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues; ces interactions tendent d'autre part à augmenter la consistance à l'état cru des compositions caoutchouteuses et donc à rendre leur mise en oeuvre ("processability") plus difficile qu'en présence de noir de carbone, et ceci même pour des silices dites hautement dispersibles.

Il existe différentes méthodes pour obtenir un mélange maître d'élastomère diénique et de charge renforçante. En particulier un type de solution consiste, pour améliorer la dispersiblité de la charge dans la matrice élastomérique, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ». Certains procédés en particulier, tels que ceux décrits dans le document US 6 048 923, permettent d'obtenir un mélange maître d'élastomère et de charge présentant une très bonne dispersion de la charge dans la matrice élastomérique, très améliorée par rapport à la dispersion de la charge dans la matrice élastomérique susceptible d'être obtenue lors du mélange en phase solide d'élastomère et de charge renforçante. Ce procédé consiste notamment à incorporer un flux continu d'un premier fluide constitué par un latex d'élastomère dans la zone de mélangeage d'un réacteur de coagulation, à incorporer un deuxième flux continu d'un deuxième fluide constitué par une dispersion aqueuse de charge sous pression dans la zone de mélangeage pour former un mélange avec le latex d'élastomère ; le mélangeage de ces deux fluides étant suffisamment énergétique pour permettre de coaguler quasiment complètement le latex d'élastomère avec la charge avant l'orifice de sortie du réacteur de coagulation puis à sécher le coagulum obtenu.

EP1873191 divulgue une composition de caoutchouc obtenue à partir d'un premier mélange maître comprenant du noir de carbone et du butadiène. Ce procédé est particulièrement adapté pour réaliser un mélange maître présentant une très bonne dispersion, à partir d'un latex de caoutchouc naturel et de noir de carbone. En effet, l'application de ce procédé est rendue particulièrement favorable par l'aptitude que possède le latex de caoutchouc naturel et le noir de carbone de coaguler ensemble spontanément. A l'inverse, la silice ne coagule pas spontanément avec le latex de caoutchouc naturel car les agrégats de silice sont typiquement hydrophiles dans la nature et ont davantage d'affinité avec l'eau qu'avec les particules d'élastomère elles-mêmes. Par ailleurs, un tel procédé présente une limite quant au taux de noir de carbone présent dans le mélange maître, or l'incorporation ultérieure de noir de carbone sous forme solide pour permettre une augmentation du taux de charge global dans la matrice élastomérique, ne permet pas de

conserver les avantages obtenus pour l'hystérèse. De plus, ce procédé est également limité dans la pratique, quant au type d'élastomère diénique susceptible d'être mis en oeuvre pour avoir une coagulation conjointe du noir de carbone et de l'élastomère au caoutchouc naturel; or l'intérêt d'utiliser d'autres élastomères pour de nombreuses applications pneumatiques est reconnu depuis longtemps.

La demanderesse a découvert de façon surprenante que contrairement à l'effet de l'ajout de noir de carbone sous forme solide et d'un deuxième élastomère, identique ou différent du premier, et contrairement aux connaissances de l'homme du métier sur les difficultés de dispersion et de mise en oeuvre de la silice dans une matrice élastomérique, l'incorporation de silice et d'un deuxième élastomère, y compris si ce deuxième élastomère est différent du premier, dans un mélange maître d'élastomère diénique et de noir de carbone possédant une très bonne dispersion du noir de carbone dans la matrice d'élastomère diénique, notamment des mélanges maîtres préparés selon le procédé précité, permettait d'obtenir de nouveaux mélanges maîtres ayant une hystérèse améliorée tout en conservant une bonne dispersion de l'ensemble de la charge dans la matrice élastomérique alors constituée des deux élastomères.

L'invention a ainsi pour objet une composition de caoutchouc à base d'au moins un élastomère diénique, une charge renforçante comprenant au moins du noir de carbone et une charge inorganique avec un taux de charge inorganique inférieur ou égal à 50 parties en poids pour cent parties d'élastomère, caractérisée en ce que la composition est obtenue à partir d'un premier mélange maître comprenant au moins un premier élastomère diénique et le noir de carbone, et présentant une dispersion du noir de carbone dans la matrice élastomérique ayant une note Z supérieure ou égale à 90, auquel est ajouté la charge inorganique et au moins un deuxième élastomère, identique ou différent du premier élastomère.

De préférence ce premier mélange maître est obtenu par mélangeage en phase liquide à partir d'un latex du premier élastomère diénique et d'une dispersion aqueuse de noir de carbone ,et encore plus préférentiellement il est obtenu selon les étapes de procédé suivantes :

- alimenter un flux continu d'un latex d'un premier élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

Selon un mode de réalisation avantageux, la fraction pondérale du premier élastomère diénique dans la matrice élastomérique est supérieure ou égale à 50%, et de préférence supérieure ou égale à 60%.

Selon un mode de réalisation préféré, le premier élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères, et plus préférentiellement le premier élastomère diénique est un caoutchouc naturel.

Selon un autre mode de réalisation préféré, le deuxième élastomère est un élastomère diénique. Préférentiellement le deuxième élastomère est choisi dans le groupe constitué par les polybutadiènes, le caoutchouc naturel, les polyisoprènes de synthèse, les copolymères de butadiène, les copolymères d'isoprène et les mélanges de ces élastomères et plus préférentiellement encore il est choisi parmi le caoutchouc naturel, un polybutadiène et un copolymère de butadiène et de styrène.

Selon un autre mode de réalisation préféré, le deuxième élastomère est choisi parmi des élastomères non diéniques.

Selon encore un autre mode de réalisation préféré, la charge inorganique de la composition est une silice ou un noir de carbone recouvert de silice.

L'invention a également pour objet un procédé pour obtenir une composition à base d'au moins un élastomère diénique, une charge renforçante comprenant au moins du noir de carbone et une charge inorganique avec un taux de charge inorganique inférieur ou égal à 50 parties en poids pour cent parties d'élastomère qui comprend les étapes suivantes :

- préparer un premier mélange maître comprenant l'élastomère diénique et le noir de carbone, ce premier mélange maître présentant une dispersion de la charge renforçante dans la matrice élastomérique ayant une note Z supérieur ou égale à 90,
- incorporer la charge inorganique, le deuxième élastomère et les autres constituantes de la composition, à l'exception du système de réticulation, au premier mélange maître dans un mélangeur en malaxant thermomécaniquement le tout jusqu'à atteindre une température maximale comprise entre 130°C et 200°C,
- refroidir l'ensemble à une température inférieure à 100°C,
- incorporer ensuite : le système de réticulation;
- malaxer le tout jusqu'à une température maximale inférieure à 120°C.

Selon une variante de réalisation préférée du procédé, la charge inorganique et le deuxième élastomère sont introduits simultanément et de préférence sous forme d'un deuxième mélange maître préalablement préparé.

Selon une autre variante de réalisation préférée, la charge inorganique et le deuxième élastomère sont introduits séparément ; la charge inorganique étant introduite avant ou après le deuxième élastomère.

Selon une autre variante de réalisation préférée, l'introduction de la charge inorganique et/ou du deuxième élastomère est décalé dans le temps de quelques dizaines de secondes à quelques minutes par rapport à l'introduction du premier mélange maître dans le mélangeur.

Avantageusement, le mélange maître est réalisé en phase liquide à partir d'au moins un latex d'élastomère et d'une dispersion de noir de carbone.

L'invention concerne également un mélange maître d'élastomère diénique et de charge renforçante qui comprend au moins un élastomère diénique et une charge renforçante comprenant au moins du noir de carbone et une charge inorganique avec un taux de charge inorganique inférieur ou égal à 50 parties en poids pour cent parties d'élastomère, obtenu par addition à un premier mélange maître comprenant au moins l'élastomère diénique et le noir de carbone, et présentant une dispersion du noir de carbone dans la matrice élastomérique ayant une note Z supérieure ou égale à 90, de la charge inorganique et d'au moins un deuxième élastomère, identique ou différent du premier élastomère.

Préférentiellement, le premier mélange maître est obtenu par mélangeage en phase liquide à partir d'un latex d'élastomère diénique et d'une dispersion aqueuse de noir de carbone, et encore plus préférentiellement il est obtenu selon les étapes de procédé suivante :

- alimenter un flux continu d'un latex d'élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

Selon un mode de réalisation avantageux, dans le mélange maître la fraction pondérale du premier élastomère diénique dans la matrice élastomérique est supérieure ou égale à 50%, et de préférence supérieure ou égale à 60%.

Selon un mode de réalisation préféré, le premier élastomère diénique du mélange maître est choisi dans le groupe constitué par les polybutadiènes, le caoutchouc naturel, les polyisoprènes de synthèse, les copolymères de butadiène, les copolymères d'isoprène et les mélanges de ces élastomères, et plus préférentiellement le premier élastomère diénique est un caoutchouc naturel.

Selon un autre mode de réalisation préféré, le deuxième élastomère du mélange maître est un élastomère diénique. Préférentiellement le deuxième élastomère est choisi dans le groupe constitué par les polybutadiènes, le caoutchouc naturel, les polyisoprènes de synthèse, les copolymères de butadiène, les copolymères d'isoprène et les mélanges de ces élastomères et plus préférentiellement encore il est choisi parmi le caoutchouc naturel, un polybutadiène et un copolymère de butadiène et de styrène.

Selon un autre mode de réalisation préféré, le deuxième élastomère du mélange maître est choisi parmi des élastomères non diéniques.

Selon encore un autre mode de réalisation préféré, la charge inorganique du mélange maître est une silice ou un noir de carbone recouvert de silice.

L'invention concerne également un procédé de préparation d'un mélange maître qui comprend au moins un élastomère diénique une charge renforçante comprenant au moins du noir de carbone et une charge inorganique avec un taux de charge inorganique inférieur ou égal à 50 parties en poids pour cent parties d'élastomère, obtenu par addition sur un premier mélange maître d'élastomère diénique et de noir de carbone réalisé selon les étapes suivantes :

- alimenter un flux continu d'un latex d'élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître,

de la charge inorganique et d'au moins un deuxième élastomère, identique ou différent du premier élastomère, en malaxant thermomécaniquement.

Selon une variante de réalisation préférée du procédé, la charge inorganique et le deuxième élastomère sont introduits simultanément et de préférence sous forme d'un deuxième mélange maître préalablement préparé.

Selon une autre variante de réalisation préférée, la charge inorganique et le deuxième élastomère sont introduits séparément ; la charge inorganique étant introduite avant ou après le deuxième élastomère.

Selon une autre variante de réalisation préférée, l'introduction de la charge inorganique et/ou du deuxième élastomère est décalé dans le temps de quelques dizaines de secondes à quelques minutes par rapport à l'introduction du premier mélange maître dans le mélangeur.

L'invention a enfin pour objet un article fini ou semi-fini, une bande de roulement de pneumatique, un pneumatique et un produit semi-fini comportant une composition telle que décrite précédemment ou un mélange maître tel que décrit précédemment.

## I. - MESURES ET TESTS

Les compositions de caoutchouc sont caractérisées, avant et après cuisson, comme indiqué ci-après.

### Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor (de petite taille) tourne au sein de l'éprouvette à 2 tours/minute et on mesure le couple utile pour entretenir ce mouvement après 4 minutes de rotation. La plasticité Mooney (MS 1+4) est exprimée en "unité Mooney" (UM, avec 1 UM = 0,83 Newton.mètre).

### Dispersion

D'une manière connue, la dispersion de charge dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.
Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation
« disperDATA » par la société Dynisco selon l'équation :

$$Z = 100 - (\%\ \text{surface non dispersée}) / 0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.
Plus est la note Z haute, meilleure est la dispersion de la charge dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomérique.

### Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 100% d'allongement (notés MA100). Les mesures de traction pour déterminer les modules accomodés sécants sont effectuées à la température de 23°C +/-2°C, et dans les conditions normales d'hygrométrie (50 +/- 5% d'humidité relative).

Les contraintes à la rupture (en MPa) et les allongements à la rupture (en %) sont également mesurés. Toutes ces mesures de traction sont effectuées à la température de 60°C ± 2°C, et dans les conditions normales d'hygrométrie (50 ± 5% d'humidité relative), selon la norme française NF T 40-101 (décembre 1979).

### Propriétés dynamiques

Les propriétés dynamiques et notamment $\tan(\delta)_{max}$, représentative de l'hystérèse, sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99, ou selon les cas à une température différente, en particulier dans les exemples cités, la température de mesure est de 60°C. On effectue un balayage en amplitude de déformation de 0,1% à 50% crête-crête (cycle aller), puis de 50% à 0,1% crête-crête (cycle retour). Les résultats exploités sont le module complexe de cisaillement dynamique (G*) et le facteur de perte tan(δ). Pour le cycle retour, on indique la valeur maximale de tan(δ) observée, noté $\tan(\delta)_{max}$,

## II. DESCRIPTION DETAILLEE DE L'INVENTION

L'invention concerne une composition à base d'au moins un élastomère diénique, une charge renforçante comprenant au moins du noir de carbone et une charge inorganique avec un taux de charge inorganique inférieur ou égal à 50 parties en poids pour cent parties d'élastomère, cette composition étant obtenue à partir d'un premier mélange maître comprenant au moins un premier élastomère diénique et le noir de carbone, et présentant une dispersion du noir de carbone dans la matrice élastomérique ayant une note Z supérieure ou égale à 90, auquel est ajouté la charge inorganique et au moins un deuxième élastomère, identique ou différent du premier élastomère.
On notera que dans la notion de pce :« parties en poids pour cent parties d'élastomère », est pris en considération l'ensemble de tous les élastomères présents dans la composition finale.
Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1) Elastomère

De façon usuelle, on utilise indifféremment dans le texte les termes « élastomère » et « caoutchouc » qui sont interchangeables.
La composition conforme à l'invention comprend au moins un premier élastomère diénique et un deuxième élastomère identique ou différend du premier, qui peut donc être ou pas un élastomère diénique.
Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).
Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.
Parmi ces élastomères diéniques, on distingue par ailleurs le caoutchouc naturel et les élastomères synthétiques.
Par élastomères diéniques synthétiques susceptible d'être utilisé conformément à l'invention, on entend plus particulièrement par élastomère diénique:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Comme il a été précisé plus haut, les procédés de mélangeage en phase liquide sont préférentiellement utilisés pour permettre d'obtenir des mélanges maîtres à base d'élastomère diénique et de noir de carbone présentant une très bonne dispersion du noir de carbone dans l'élastomère. Ainsi notamment pour la réalisation du premier mélange maître d'élastomère diénique et de noir de carbone, on utilisera plus particulièrement un latex d'élastomère diénique, le latex d'élastomère étant une forme particulière de l'élastomère qui se présente sous forme de particules d'élastomère dispersées dans l'eau.

L'invention concerne donc préférentiellement les latex d'élastomères diéniques, les élastomères diéniques étant ceux définis précédemment.

Plus particulièrement, pour le caoutchouc naturel (NR) qui convient particulièrement à l'invention, ce caoutchouc naturel existe sous différentes formes comme le détail le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc

naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera avantageusement pour l'invention des latex de caoutchouc naturel concentrés de qualité HA.
Le latex de NR peut être préalablement modifié physiquement ou chimiquement (centrifugation, traitement enzymatique, modifiant chimique...)
Le latex peut être utilisé directement ou être préalablement dilué dans de l'eau pour faciliter sa mise en oeuvre.

Ainsi à tire de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensio-actif.

Convient particulièrement à l'invention un latex de SBR, notamment un SBR préparé en émulsion ("ESBR") ou un SBR préparé en solution ("SSBR"), et plus particulièrement un SBR préparé en émulsion.
Il existe deux grands types de procédés de copolymerisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.
Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81.
Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co., Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

Au titre du deuxième élastomère de la composition lorsqu'il ne s'agit pas d'élastomère diénique, conviennent particulièrement des élastomères butyl non diéniques tels que des homopolymères de poly(isobutylène) ou des copolymères à base de poly(isobutylène) (bien entendu s'il s'agit de copolymères avec de l'isoprène, on retrouve les élastomères diéniques décrits précédemment), ainsi que les dérivés halogénés, en particulier généralement bromés ou chlorés, de ces homopolymères de poly(isobutylène) et copolymères à base de poly(isobutylène).
Conviennent également parmi les élastomères non diéniques, des copolymères d'isobutylène et de dérivés de styrène tels que les copolymères d'isobutylène et méthylstyrène bromé (BIMS) dont fait notamment partie l'élastomère nommé EXXPRO commercialisé par la société Exxon.
On peut également citer à titre d'élastomère non diénique convenant particulièrement pour l'invention, les élastomères thermoplastiques (TPE) non diéniques.

Avantageusement la fraction pondérale du premier élastomère diénique dans la matrice élastomérique est supérieure ou égale à 50% et de préférence supérieure ou égale à 60%.

II-2) Charges

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N400, N660, N683, N772, N990).
A titre de noir de carbone, conviennent également les noirs de carbone partiellement ou intégralement recouverts de silice par un post traitement, ou les noirs de carbone modifiés in situ par de la silice tels que, à titre non limitatif, les

charges qui commercialisées par la société Cabot Corporation sous la dénomination Ecoblack™ « CRX 2000 » ou « CRX4000 ».

Par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("*non-black filler*") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant pour être utilisée à titre de charge renforçante l'emploi d'un agent ou système de couplage destiné à assurer une liaison chimique stable entre l'élastomère isoprénique et ladite charge.

Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non (dans ce cas la charge inorganique ne joue pas de rôle de renforcement).

L'état physique sous lequel se présente la charge inorganique est indifférent, que ce soit sous forme de poudre, de microperles, de granulés, de billes ou toute autre forme densifiée appropriée. Bien entendu on entend également par charge inorganique des mélanges de différentes charges inorganiques, en particulier de charges siliceuses et/ou alumineuses hautement dispersibles telles que décrites ci-après.

Comme charges inorganiques conviennent notamment des charges minérales du type siliceuse, en particulier de la silice ($SiO_2$), ou du type alumineuse, en particulier de l'alumine ($Al_2O_3$). La silice utilisée peut être toute silice connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices Ultrasil 7000 et Ultrasil 7005 de la société Evonik, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque les compositions de l'invention sont destinées à des bandes de roulement de pneumatique à faible résistance au roulement, la charge inorganique utilisée, en particulier s'il s'agit de silice, a de préférence une surface BET comprise entre 45 et 400 $m^2/g$, plus préférentiellement comprise entre 60 et 300 $m^2/g$.

De manière préférentielle, conviennent particulièrement pour la présente invention les charges inorganiques dont la taille moyenne (en masse) est comprise entre 20 et 300nm, plus préférentiellement entre 20 et 150 nm. Cette taille moyenne est mesurée de manière classique après dispersion, par désagglomération aux ultrasons, de la charge à analyse dans l'eau ou une solution aqueuse contenant un agent tensioactif. Pour une charge inorganique telle que silice, la mesure est réalisée au moyen d'un sédimentomètre centrifuge à détection rayons X type "XDC" ("X-rays Disk Centrifuge"), commercialisé par la société Brookhaven Instruments, selon le mode opératoire qui suit. On réalise une suspension de 3,2 g d'échantillon de charge inorganique à analyser dans 40 ml d'eau, par action durant 8 minutes, à 60% de puissance (60% de la position maxi du "output control"), d'une sonde ultrasons de 1500 W (sonificateur Vibracell 3/4 pouce commercialisé par la société Bioblock); après sonification, on introduit 15 ml de la suspension dans le disque en rotation à une vitesse variant entre 3000 et 6000 tours par minute (la vitesse étant adaptée en fonction de la taille moyenne de la charge : plus la taille est petite, plus la vitesse est élevée); après sédimentation pendant 120 minutes, la distribution en masse des tailles de particules et la taille moyenne en masse des particules dw sont calculées par le logiciel du sédimentomètre "XDC" ($dw = \sum(ni\ di5) / \sum(ni\ di4)$ avec ni nombre d'objets de la classe de taille ou diamètre di).

De manière préférentielle, le taux de charge totale (noir de carbone et charge inorganique telle que silice) est compris entre 20 et 200 pce, plus préférentiellement entre 30 et 150 pce et encore plus préférentiellement entre 30 et 100 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise du noir de carbone dont le taux varie de 30 à 80 pce et une charge inorganique, en particulier de la silice, dont le taux varie de 5 à 50 pce, plus particulièrement la charge totale de la composition comprenant du noir de carbone dont le taux varie de 35 à 70 pce et une charge inorganique, en particulier de la silice, dont le taux varie de 5 à 35 pce, de façon encore plus préférentielle la charge totale comprenant du noir de carbone dont le taux varie de 40 à 65 pce et une charge inorganique, en particulier de la silice, dont le taux varie de 10 à 30 pce.

II-3) Mélanges maîtres - Composition de caoutchouc

Avantageusement les mélanges maîtres et les compositions ainsi réalisés sont susceptibles d'être utilisés dans les applications pour pneumatique.

Les compositions de caoutchouc pour pneumatique à base des mélanges maîtres et de charge inorganique selon l'invention, peuvent comporter également de façon connue un agent de couplage et/ou un agent de recouvrement et un système de vulcanisation.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

$$\text{(III)} \qquad Z - A - S_x - A - Z \quad ,$$

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

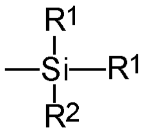 ; 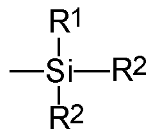 ; 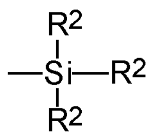 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule III ci-dessus) tels que

décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'agent de recouvrement, on considérera généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

Dans les compositions de caoutchouc conformes à l'invention, la teneur en agent de couplage est préférentiellement comprise entre 0,1 et 12 % massique de la charge inorganique pour une surface de CTAB de 160m$^2$/g plus préférentiellement entre 4 et 10 % massique de la charge inorganique pour une surface de CTAB de 160m$^2$/g ; et/ou la teneur en agent de recouvrement est préférentiellement comprise 0,1 et 20 % massique de la charge inorganique pour une surface de CTAB de 160m$^2$/g plus préférentiellement entre 5 et 20 % massique de la charge inorganique pour une surface de CTAB de 160m$^2$/g. La teneur en agent de couplage pouvant être ajustée au niveau de surface spécifique de la charge.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

On notera que l'on peut également envisager de réaliser les mélanges maîtres conformes à l'invention en y incorporant, notamment avant la phase de séchage, des additifs tels que décrits précédemment, huile, anti-oxydant, agent de couplage, agent de recouvrement...

II-4). Fabrication compositions de caoutchouc et des mélanges maîtres

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation l'invention, tous les constituants de base des compositions de l'invention, à l'exception du système de vulcanisation, sont incorporés de manière intime, par malaxage, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un mode de réalisation préférentiel de l'invention le deuxième élastomère et la charge inorganique sont incorporés au premier élastomère diénique et au noir de carbone qui ont été préalablement préparés sous forme d'un premier mélange maître.

Préférentiellement ce premier mélange maître est réalisé en phase « liquide ». Pour ce faire, on a fait appel à l'élastomère diénique sous forme de latex qui se présente sous forme de particules d'élastomère dispersées dans l'eau,

et à une dispersion aqueuse du noir de carbone car, c'est-à-dire une charge dispersée dans de l'eau, couramment appelée « slurry ». Plus préférentiellement encore on suivra les étapes de procédé décrites dans le document US 6 048 923, qui consiste notamment à incorporer un flux continu d'un premier fluide constitué par le latex d'élastomère dans la zone de mélangeage d'un réacteur de coagulation, à incorporer un deuxième flux continu d'un deuxième fluide constitué par la dispersion aqueuse de noir de carbone sous pression dans la zone de mélangeage pour former un mélange avec le latex d'élastomère ; le mélangeage de ces deux fluides étant suffisamment énergétique pour permettre de coaguler quasiment complètement le latex d'élastomère avec le noir de carbone avant l'orifice de sortie du réacteur de coagulation puis à sécher le coagulum obtenu.

Selon un autre mode de réalisation préférentiel de l'invention, la charge inorganique et le deuxième élastomère sont incorporés au premier mélange maître en se présentant également sous forme d'un deuxième mélange maître qui aura été préalablement préparé. Ce deuxième mélange maître peut être préparé en particulier sous forme solide par malaxage thermomécanique du deuxième élastomère et de la charge inorganique ; il peut également être préparé par tout autre procédé et notamment il peut être également préparé en phase liquide.

On notera en particulier que l'incorporation du deuxième élastomère seul et la charge inorganique seule ou sous la forme d'un deuxième mélange maître contenant le deuxième élastomère et la charge inorganique, peut être réalisée simultanément à l'introduction dans le mélangeur des autres constituants (notamment le premier élastomère diénique ou premier mélange maître) mais également avantageusement que cette ou ces incorporations peut être décalées dans le temps de quelques dizaines de secondes à quelques minutes. Dans le cas de l'introduction du deuxième élastomère seul et de la charge inorganique seule, décalée dans le temps de quelques dizaines de secondes à quelques minutes, la charge inorganique peut être introduite avant, après ou simultanément au deuxième élastomère.

A titre d'exemple, la première phase (non-productive) est conduite en une seule étape thermomécanique au cours de laquelle on introduit, dans un mélangeur approprié tel qu'un mélangeur interne usuel, tous les constituants nécessaires (sous forme le cas échéant de mélanges maîtres comme on l'a précisé précédemment), les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min.

Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule de tourisme, poids-lourds etc.

## III EXEMPLES DE REALISATION DE L'INVENTION

### III.1 Préparation de mélange- maître de caoutchouc naturel et de noir de carbone

Les premiers mélanges maîtres d'élastomère diénique et de noir de carbone présentant une note de dispersion de la charge dans la matrice élastomérique supérieure ou égale à 90, sont réalisés en phase liquide selon le procédé décrit dans le brevet U.S. Patent No 6,048,923.

Ainsi on prépare selon le protocole détaillé dans le brevet précité, un mélange maître à partir de noir de carbone N234 commercialisé par la société Cabot Corporation, et de latex de caoutchouc naturel de champs (« field latex ») en provenance de Malaisie présentant un extrait sec de caoutchouc de 28% et un taux d'ammoniac de 0,3%.

On obtient ainsi un mélange maître A de caoutchouc naturel et de noir de carbone dans lequel le taux de noir de carbone est de 50 pce et qui présente une dispersion du noir dans la matrice de caoutchouc naturel ayant une note Z de 90.

III-2 Préparation des compositions de caoutchouc

Les compositions témoins TM sont réalisées selon un procédé classique de mélangeage sous forme solide dans lequel le ou les élastomères, selon que le deuxième élastomère est identique ou différent du premier élastomère, et la charge renforçante, dont le noir de carbone N234 commercialisé par la société Cabot corporation et, le cas échéant, la silice de précipitation Ultrasil 7000 commercialisée par la société Evonik, sont introduits sous forme solide.
Les compositions de caoutchouc témoins TA non-conformes à l'invention sont réalisées à partir du mélange maître A auquel est ajouté selon un procédé classique de mélangeage sous forme solide un deuxième élastomère et du noir de carbone N234 commercialisé par la société Cabot Corporation.
Les compositions de caoutchouc CA conformes à l'invention sont réalisées à partir du premier mélange maître A auquel est ajouté selon un procédé classique de mélangeage sous forme solide un deuxième élastomère et de la silice de précipitation (poudre ou granulés) Ultrasil VN3 ou Ultrasil 7000 commercialisée par la société Evonik.
Les différentes compositions sont réalisées de la manière suivante :

> On procède pour les essais qui suivent de la manière suivante: on introduit dans un mélangeur interne, rempli à 70% et dont la température initiale de cuve est d'environ 90°C, le premier mélange maître A pour les compositions TA et CA (ou le caoutchouc naturel sous forme solide et le noir de carbone N234 pour les compositions TM), un deuxième élastomère, identique ou différent, une deuxième charge renforçante (noir de carbone N234 ou silice Ultrasil VN3 ou Ultrasil 7000), un agent de couplage et/ou un agent de recouvrement le cas échéant puis, après une à deux minutes de malaxage, les divers autres ingrédients à l'exception du système de vulcanisation. Selon une variante de réalisation précisée dans certains des essais qui suivent, le deuxième élastomère et la deuxième charge renforçante, et l'agent de couplage le cas échéant, sont introduits sous forme d'un mélange maître réalisé préalablement sous forme solide.

On conduit alors un travail thermomécanique (phase non-productive) en une étape (durée totale du malaxage égale à environ 5 min), jusqu'à atteindre une température maximale de "tombée" d'environ 165°C.
On récupère le mélange ainsi obtenu, on le refroidit puis on ajoute le système de vulcanisation (soufre et accélérateur sulfénamide) sur un mélangeur externe à 70°C, en mélangeant le tout (phase productive) pendant environ 5 à 6 min. Lors de la présence d'agent de recouvrement, ce dernier peut aussi être introduit sur mélangeur externe au lieu de l'introduction sur mélangeur interne.
Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.
Dans les variantes de réalisation précisées dans certains des essais qui suivent, la réalisation du mélange maître du deuxième élastomère et de la deuxième charge (et de l'agent de couplage le cas échéant) s'effectue par l'introduction simultanée ou non du dit deuxième élastomère et de la dite deuxième charge (et de l'agent de couplage le cas échant) sur un mélangeur interne puis on conduit un travail thermomécanique (phase non-productive) en une étape (durée totale du malaxage égale à environ 5min), jusqu'à atteindre une température maximale de "tombée" d'environ 165°C.

III-3 Exemple 1

Cet exemple a pour but de mettre en évidence les propriétés d'une composition de caoutchouc conforme à l'invention à base d'un coupage de caoutchouc naturel et de copolymère de styrène et de butadiène, SBR, améliorées vis-à-vis de compositions témoins à base du même coupage élastomérique non-conformes à l'invention du fait de la nature de leur charge renforçante ou de leur procédé de préparation.
Les compositions de caoutchouc TM1 et TM2 sont préparées « en masse » à partir d'un coupage de caoutchouc naturel et d'un SBR, et de noir de carbone et, le cas échéant, de silice, sous forme solide comme détaillé dans le paragraphe III-2.
La composition témoin TA1 et la composition conforme à l'invention CA2 sont respectivement préparés à partir d'un premier mélange maître A dans lesquels sont ajoutés sous forme solide un deuxième élastomère, en l'occurrence un SBR, et une deuxième charge renforçante, respectivement le noir de carbone pour TA1 ou la silice ultrasil VN3 pour CA2 selon le procédé détaillé dans paragraphe III-2.
La composition témoin T'A1 et la composition conforme à l'invention C'A2 sont respectivement préparés à

partir d'un premier mélange maître A dans lesquels sont ajoutés sous forme solide un mélange maître préparé sous forme également solide et comprenant un deuxième élastomère et une deuxième charge renforçante, respectivement le noir de carbone pour T'A1 ou la silice ultrasil VN3 pour C'A2 selon le procédé détaillé dans paragraphe III-2.

L'ensemble des compositions quelque soit le procédé de fabrication présente la formulation de base suivante (en pce) :

- caoutchouc naturel 80
- SBR (a) 20
- 6PPD (b) 1,5
- Plastifiant (c) 1
- Acide stéarique 2
- Oxyde de zinc(d) 3
- accélérateur (e) 1,1
- soufre 1,1

(a) SSBR avec 25% de styrène 25% de motifs polybutadiène 1-2 et 50% de motifs polybutadiène 1-4 trans (Tg = - 48°C) ;
(b) N-1,3-diméthylbutyl-N-phényl-para-phénylènediamine ("Santoflex 6-PPD" de la société Flexsys) ;
(c) huile MES ("Catenex SNR" de Shell)
(d) oxyde de zinc (grade industriel - société Umicore
(e) N-cyclohexyl-2-benzothiazyl-sulfénamide ("Santocure CBS" de la société Flexsys).

En plus de ces constituants, les compositions TM1, TM2, TA1, T'A1, CA2 et C'A2se distinguent les unes des autres par la nature et le taux (en pce) de deuxième charge renforçante qu'elles incluent, détaillés dans le tableau 1 qui suit.

Tableau 1

| Composition | TM1 | TM2 | TA1 | T'A1 | CA2 | C'A2 |
|---|---|---|---|---|---|---|
| N234 (1) | - | - | 40 | 40 | 40 | 40 |
| N234 (2) | 55 | 40 | 15 | - | - | - |
| N234 (3) | | | | 15 | - | - |
| Silice (4) | - | 15 | - | - | 15 | - |
| Silice (5) | - | - | - | - | - | 1,5 |
| Silane (6) | - | 1,5 | - | - | 1,5 | 1,5 |

(1) noir de carbone provenant du mélange maître A
(2) noir de carbone ajouté au coupage élastomérique ou au mélange maître A par mélangeage standard sous forme solide.
(3) noir de carbone provenant du mélange maître contenant le deuxième élastomère ajouté au mélange maître A par mélangeage standard sous forme solide.
(4) Silice Ultrasil VN3 ajoutée au mélange maître A par mélangeage standard sous forme solide.
(5) Silice Ultrasil VN3 provenant du mélange maître contenant le deuxième élastomère ajoutée au mélange maître A par mélangeage standard sous forme solide.
(6) TESPT ("SI69" de la société Evonik) ;

Les propriétés mesurées avant et après caisson à 150°C pendant 40 minutes sont données dans le tableau 2 qui suit.

Tableau 2

| Composition | TM1 | TM2 | TA1 | T'A1 | CA2 | C'A2 |
|---|---|---|---|---|---|---|
| Propriétés avant cuisson | | | | | | |
| Mooney | 56 | 51 | 51 | 48 | 40 | 42 |
| Propriétés après cuisson | | | | | | |

(suite)

| Composition | TM1 | TM2 | TA1 | T'A1 | CA2 | C'A2 |
|---|---|---|---|---|---|---|
| Note Z | 79 | 45 | 73 | 71 | 65 | 70 |
| MA 100 | 2,1 | 1,7 | 2,2 | 2,2 | 1,9 | 1,8 |
| MA300/MA100 | 1,26 | 1,09 | 1,37 | 1,43 | 1,28 | 1,28 |
| Déformation rupture | 561 | 612 | 541 | 547 | 595 | 609 |
| Contrainte rupture | 25 | 24 | 25,4 | 26,7 | 24,5 | 24,5 |
| Tan($\delta$)max | 0,206 | 0,167 | 0,192 | 0,196 | 0,141 | 0,144 |

La comparaison de la composition Témoin TM1 pour laquelle ont été ajoutés du SBR et du noir de carbone (55 pce) avec la composition TM2 pour laquelle ont été ajoutés du SBR et du noir (40pce) et de de la silice (15 pce), permet de constater que l'introduction de silice, permet une amélioration attendue de l'hystérèse (baisse de tan$\delta$) ainsi qu'un avantage en déformation à la rupture mais au détriment d'une dégradation importante de la dispersion de la charge renforçante (note Z) ainsi que du renforcement (MA100/M1300).

Pour la composition CA2 réalisée à partir du mélange maître A présentant une bonne dispersion, conforme à l'invention, et comparée à la composition TM2, on constate que l'ajout de SBR et de silice au mélange maître permet non seulement d'abaisser l'hystérèse mais aussi de conserver une bonne dispersion de la charge renforcante dans la composition et d'améliorer le renforcement (MA300/MA100) permettant d'obtenir des valeurs proches du témoin TM1. On constate également que l'abaissement de l'hystérèse (16%) et l'augmentation du renforcement (17%) pour la composition CA2 conforme à l'invention comparativement à la composition témoin TM2, sont de façon surprenante plus importantes que ce qu'on observe avec l'addition de SBR et de noir de carbone au mélange maître en comparant la composition TA1 à la composition TM1 (7% de baisse hystérèse et 8% de gain en renforcement).

La comparaison respective des compositions C'A2 et CA2 ou T'A1 et TA1 permet de constater que le mode d'introduction du deuxième élastomère et de la deuxième charge n'a pas d'impact sur les propriétés obtenues. Ainsi es compositions C'A2 et CA2 conformes à l'invention, comparativement à la composition témoin TM2 montrent une augmentation du renforcement et une diminution de l'hystérèse plus importante que ce qui est obtenue en comparant les compositions T'A1 et TA1 respectivement à la composition TM1.

III-4 Exemple 2

Cet exemple a pour but de mettre en évidence les propriétés d'une composition de caoutchouc conforme à l'invention à base de caoutchouc naturel, améliorées vis-à-vis de compositions témoins à base du même élastomère non-conformes à l'invention du fait de la nature de leur charge renforçante ou de leur procédé de préparation.

Les compositions de caoutchouc TM3 et TM4 sont préparées « en masse » à partir de caoutchouc naturel, et de noir de carbone et, le cas échéant, de silice, sous forme solide comme détaillé dans le paragraphe III-2.

La composition conforme à l'invention CA4 est préparée à partir d'un premier mélange maître A dans lesquel est ajouté sous forme solide un deuxième élastomère identique du premier élastomère donc constitué par du caoutchouc naturel et une deuxième charge renforçante, en l'occurrence la silice Ultrasil VN3 selon le procédé détaillé dans paragraphe III-2.

La composition témoin T'A3 et la composition conforme à l'invention C'A4 sont respectivement préparés à partir d'un premier mélange maître A dans lesquels sont ajoutés sous forme solide un mélange maître préparé sous forme également solide et comprenant un deuxième élastomère identique au premier donc constitué par du caoutchouc naturel et une deuxième charge renforçante, respectivement le noir de carbone pour T'A3 ou la silice ultrasil VN3 pour C'A4 selon le procédé détaillé dans paragraphe III-2.

L'ensemble des compositions quelque soit le procédé de fabrication présente la formulation de base suivante (en pce) :

- caoutchouc naturel (NR) 100
- 6PPD (b) 1,5
- Plastifiant (c) 1
- Acide stéarique 2
- Oxyde de zinc (d) 3
- accélérateur (e) 1,1
- soufre 1,1

En plus de ces constituants, les compositions TM3, TM4, TA3, T'A3, CA4 et C'A4 se distinguent les unes des autres par la nature et le taux (en pce) de deuxième charge renforçante qu'elles incluent, détaillés dans le tableau 3 qui suit.

Tableau 3

| Composition | TM3 | TM4 | T'A3 | CA4 | C'A4 |
|---|---|---|---|---|---|
| N234 (1) | - | - | 42 | 42 | 42 |
| N234 (2) | 55 | 42 | - | - | - |
| N234 (3) | - | - | 13 | - | - |
| Silice (4) | - | 13 | - | 13 | - |
| Silice (5) | - | - | - | - | 13 |
| Silane (6) | - | 1,3 | - | 1,3 | 1,3 |

(1) noir de carbone provenant du mélange maître A
(2) noir de carbone ajouté au coupage élastomérique par mélangeage standard sous forme solide.
(3) noir de carbone provenant du mélange maître contenant le deuxième élastomère ajouté au mélange maître A par mélangeage standard sous forme solide.
(4) Silice Ultrasil VN3 ajoutée au mélange maître A par mélangeage standard sous forme solide.
(5) Silice Ultrasil VN3 provenant du mélange maître contenant le deuxième élastomère, ajoutée au mélange maître A par mélangeage standard sous forme solide.
(6) TESPT ("SI69" de la société Evonik)

Les propriétés mesurées avant et après caisson à 150°C pendant 40 minutes sont données dans le tableau 4 qui suit.

Tableau 4

| Composition | TM3 | TM4 | T'A3 | CA4 | C'A4 |
|---|---|---|---|---|---|
| Propriétés avant cuisson | | | | | |
| Mooney | 89 | 81 | 80 | 67 | 66 |
| Propriétés après cuisson | | | | | |
| Note Z | 66 | 45 | 79 | 63 | 77 |
| MA 100 | 2,5 | 1,8 | 2,7 | 2,0 | 1,9 |
| MA300/MA100 | 1,24 | 1,10 | 1,32 | 1,30 | 1,34 |
| Déformation rupture | 614 | 628 | 516 | 610 | 607 |
| Contrainte rupture | 26,5 | 23,1 | 25,1 | 26,1 | 26,0 |
| Tan(δ)max | 0,204 | 0,162 | 0,199 | 0,136 | 0,134 |

La comparaison de la composition Témoin TM3 pour laquelle ont été ajoutés du NR et du noir de carbone (55 pce) avec la composition TM4 pour laquelle ont été ajoutés du NR et du noir (42 pce) et de de la silice (13 pce), permet de constater que l'introduction de silice, permet une amélioration attendue de l'hystérèse (baisse de tanδ) mais au détriment d'une dégradation importante de la dispersion de la charge renforçante (note Z) ainsi que du renforcement (MA100/M1300).

Pour la composition C'A4 réalisée à partir du mélange maître A présentant une bonne dispersion, conforme à l'invention, et comparée à la composition TM4, on constate que l'ajout au mélange maître A d'un mélange maître NR/silice préalablement réalisé en mélangeage standard sous forme solide permet non seulement d'abaisser l'hystérèse mais aussi de conserver une bonne dispersion de la charge renforcante dans la composition et d'améliorer le renforcement (MA300/MA100) permettant d'obtenir des valeurs supérieures du témoin TM1. On constate également que l'abaissement de l'hystérèse (17%) et l'augmentation du renforcement (21%) pour la composition C'A4 conforme à l'invention comparativement à la composition témoin TM4, sont de façon surprenante plus importantes que ce qu'on observe avec l'ajout au mélange maître A d'un mélange maître NR/noir de carbone préalablement réalisé en mélangeage standard sous forme solide en comparant la composition T'A3 à la composition TM3 (3% de baisse hystérèse et 6% de gain en

renforcement).

La comparaison respective des compositions C'A4 et CA4 permet de constater que le mode d'introduction du deuxième élastomère et de la deuxième charge n'a pas d'impact sur les propriétés obtenue. Ainsi la composition CA4, conforme à l'invention, comparativement à la composition témoin TM2 montre une augmentation du renforcement et une diminution de l'hystérèse comparable à ce qui est obtenue avec la composition C'A4, conforme à l'invention, comparativement à la composition témoin TM2.

III-5 Exemple 3

Cet exemple a pour but de mettre en évidence l'obtention des propriétés améliorées de compositions conformes à l'invention, à base de caoutchouc naturel mais présentant différents coupages de charge renforçante (noir de carbone et silice).

Les compositions de caoutchouc TM5, TM6 et TM7 sont préparées « en masse » à partir de caoutchouc naturel, de noir de carbone et de silice, sous forme solide comme détaillé dans le paragraphe III-2.

Les compositions conformes à l'invention CA5, CA6 et CA7 sont préparées à partir d'un premier mélange maître A dans lesquels sont ajoutés sous forme solide du caoutchouc naturel et de la silice selon le procédé détaillé dans paragraphe III-2.

L'ensemble des compositions présente une formulation de base identique à celle de l'exemple 2.

Elles se distinguent les unes des autres par les taux (en pce) de noir de carbone et de silice comme le précise le tableau 5 qui suit.

Tableau 5

| Composition | TM5 | TM6 | TM7 | CA5 | CA6 | CA7 |
|---|---|---|---|---|---|---|
| N234 (1) | | | | 40 | 35 | 35 |
| N234 (2) | 40 | 35 | 35 | | | |
| Silice (4) | 10 | 10 | 20 | 10 | 10 | 20 |
| Silane (6) | 1 | 1 | 2 | 1 | 1 | 2 |

(1) noir de carbone provenant du mélange maître A
(2) noir de carbone ajouté au coupage élastomérique par mélangeage standard sous forme solide.
(4) Silice Ultrasil VN3 ajoutée au coupage élastomérique ou au mélange maître A par mélangeage standard sous forme solide.
(6) TESPT ("SI69" de la société Evonik)

Les propriétés mesurées avant et après caisson à 150°C pendant 40 minutes sont données dans le tableau 6 qui suit.

Tableau 6

| Composition | TM5 | TM6 | TM7 | CA5 | CA6 | CA7 |
|---|---|---|---|---|---|---|
| Propriétés avant cuisson | | | | | | |
| Mooney | 50 | 49 | 62 | 38 | 35 | 49 |
| Propriétés après cuisson | | | | | | |
| MA 100 | 2,0 | 1,8 | 1,7 | 2,2 | 1,9 | 2,0 |
| MA300/MA100 | 1,20 | 1,20 | 1,10 | 1,28 | 1,31 | 1,16 |
| Déformation rupture | 574 | 613 | 636 | 563 | 580 | 584 |
| Contrainte rupture | 25,4 | 26,8 | 26,8 | 25,5 | 26,7 | 24,4 |
| Tan(δ)max | 0,128 | 0,109 | 0,139 | 0,111 | 0,083 | 0,117 |

Comparativement aux compositions témoins TM5, TM6, TM7, on constate que les trois compositions CA5, CA6 et CA7, conformes à l'invention et présentant des coupages de charge renforçante différent (mais appartenant tous aux plages de la présente invention), présentent toutes le compromis de propriétés améliorées présentées dans

les exemples précédents, à savoir une valeur Mooney diminuée, un renforcement (MA300/MA100) améliorée et une très forte baisse d'hystérèse (16% à 24%) et ceci sans dégradation des propriétés de déformation et de contrainte à la rupture.

III-6 Exemple 4

Cet exemple a pour but de mettre en évidence les propriétés d'une composition de caoutchouc conforme à l'invention à base d'un coupage de caoutchouc naturel et de polybutadiène, BR, améliorées vis-à-vis de compositions témoins à base du même coupage élastomérique non-conformes à l'invention du fait de la nature de leur charge renforçante ou de leur procédé de préparation.

Les compositions de caoutchouc TM8, TM9 et TM10 sont préparées « en masse » à partir d'un coupage de caoutchouc naturel et d'un BR, et de noir de carbone et, le cas échéant, de silice, sous forme solide comme détaillé dans le paragraphe III-2.

La composition témoin TA8 et les compositions conformes à l'invention CA9 et CA10 sont respectivement préparés à partir d'un premier mélange maître A dans lesquels sont ajoutés sous forme solide un deuxième élastomère polybutadiène et une deuxième charge renforçante respectivement du noir de carbone pour la composition TA8 et de la silice pour les compositions CA9 et CA10, selon le procédé détaillé dans paragraphe III-2.

L'ensemble des compositions quelque soit le procédé de fabrication présente la formulation de base suivante (en pce) :

- caoutchouc naturel 80
- BR (f) 20
- 6PPD (b) 1,5
- Plastifiant (c) 1
- Acide stéarique 2
- Oxyde de zinc (d) 3
- accélérateur (e) 1,1
- soufre 1,1

(f) BR (Nd) avec 0,7% de 1-2 ; 1,7% de trans 1-4 ; 98% de cis 1-4 (Tg = - 105°C) ;

En plus de ces constituants, les compositions TM8, TM9, TM10, TA8, CA9 et CA10 se distinguent les unes des autres par la nature et le taux (en pce) de deuxième charge renforçante qu'elles incluent, détaillés dans le tableau 7 qui suit.

Tableau 7

| Composition | TM8 | TM9 | TA8 | CA9 | TM10 | CA10 |
|---|---|---|---|---|---|---|
| N234 (1) | - | - | 40 | 40 | - | 52 |
| N234 (2) | 55 | 40 | 15 | - | 52 | |
| Silice (7) | - | 15 | - | 15 | 15 | 15 |
| Silane (6) | - | 1,5 | - | 1,5 | 1,5 | 1,5 |

(1) noir de carbone provenant du le mélange maître A
(2) noir de carbone ajouté au coupage élastomérique ou au mélange maître A par mélangeage standard sous forme solide.
(6) TESPT ("SI69" de la société Evonik)
(7) Silice Ultrasil 7000 ajoutée au coupage élastomérique ou au mélange maitre A par mélangeage standard sous forme solide.

Les propriétés mesurées avant et après caisson à 150°C pendant 40 minutes sont données dans le tableau 8 qui suit.

Tableau 8

| Composition | TM8 | TM9 | TA8 | CA9 | TM10 | CA10 |
|---|---|---|---|---|---|---|
| Propriétés avant cuisson | | | | | | |
| Mooney | 65 | 62 | 54 | 54 | 64 | 57 |
| Propriétés après cuisson | | | | | | |
| Note Z | 68 | 61 | 82 | 85 | 64 | 88 |
| MA 100 | 2,3 | 1,9 | 2,2 | 1,9 | 2,3 | 2,2 |
| MA300/MA100 | 1,23 | 1,10 | 1,31 | 1,21 | 1,15 | 1,32 |
| Déformation rupture | 567 | 616 | 573 | 630 | 525 | 507 |
| Contrainte rupture | 26,0 | 24,6 | 26,1 | 25,8 | 22,4 | 23,6 |
| Tan($\delta$)max | 0,192 | 0,164 | 0,202 | 0,150 | 0,219 | 0,198 |

La comparaison de la composition Témoin TM8 pour laquelle ont été ajoutés du BR et du noir de carbone (55 pce) avec la composition TM9 pour laquelle ont été ajoutés du BR et du noir (40pce) et de de la silice (15 pce), permet de constater que l'introduction de silice, permet une amélioration attendue de l'hystérèse (baisse de tan$\delta$) ainsi qu'un avantage en déformation à la rupture mais au détriment d'une dégradation de la dispersion de la charge renforçante (note Z) ainsi que du renforcement (MA100/M1300).

Pour la composition CA9 réalisée à partir du mélange maître A présentant une bonne dispersion, conforme à l'invention, et comparée à la composition TM9, on constate que l'ajout de BR et de silice au mélange maître permet non seulement d'abaisser l'hystérèse mais aussi de conserver une bonne dispersion de la charge renforcante dans la composition et d'améliorer le renforcement (MA300/MA100) permettant d'obtenir des valeurs proches du témoin TM8. On constate également que l'abaissement de l'hystérèse (9%) et l'augmentation du renforcement (10%) pour la composition CA9 conforme à l'invention comparativement à la composition témoin TM9, sont de de façon surprenante plus importantes que ce qu'on observe avec l'addition de BR et de noir de carbone au mélange maître en comparant la composition TA8 à la composition TM8 (5% de hausse d'hystérèse et 7% de gain en renforcement).

Comparativement à la composition témoin TM10, on constate que la composition CA10 conforme à l'invention et présentant un coupage de charge renforçante différent de la composition conforme à l'invention CA9 (mais appartenant aux plages de la présente invention), présente le compromis de propriétés améliorées observé avec la composition conforme à linvention CA9, à savoir une valeur Mooney diminuée, un renforcement (MA300/MA100) améliorée (15%) et une baisse d'hystérèse (10%) et ceci sans dégradation des propriétés de déformation et de contrainte à la rupture.

Tous ces exemples montrant des compositions ayant une formulation identique (notamment même charges et même taux de ces charges) mais dont le mode de préparation, mettent en évidence la synergie liée à la qualité de la dispersion de la charge au sein de la matrice élastomérique et à la nature de la charge ajoutée quelque soit la nature du deuxième élastomère.

On constate de façon surprenante que l'addition de silice et d'élastomère à un mélange maître montrant une très bonne dispersion, contrairement à l'addition de noir de carbone et d'élastomère à ce même mélange maître, permet d'obtenir à la fois des bons niveaux de dispersion, des renforcement élevés et de très faibles hystérèses. Ces résultats démontrent un avantage des compositions conformes à l'invention en terme de d'usure, de résistance au roulement et de thermique des pneumatiques utilisant ces compositions.

## Revendications

1. Composition de caoutchouc à base d'au moins un élastomère diénique, une charge renforçante comprenant au moins du noir de carbone et une charge inorganique, c'est-à-dire toute charge inorganique ou minérale, quelles que soient sa couleur et son origine par opposition au noir de carbone, avec un taux de charge inorganique inférieur ou égal à 50 parties en poids pour cent parties d'élastomère, **caractérisée en ce que** la composition est obtenue à partir d'un premier mélange maître comprenant au moins un premier élastomère diénique et le noir de carbone, et présentant une dispersion du noir de carbone dans la matrice élastomérique ayant une note Z, telle que définie aux pages 7 et 8 de la description, supérieure ou égale à 90, auquel est ajouté la charge inorganique et au moins un deuxième élastomère, identique ou différent du premier élastomère.

2. Composition selon la revendication 1, dans laquelle le premier mélange maître est obtenu par mélangeage en phase

liquide à partir d'un latex du premier élastomère diénique et d'une dispersion aqueuse de noir de carbone.

**3.** Composition selon la revendication 2, dans laquelle le premier mélange maître est obtenu selon les étapes de procédé suivantes :

- alimenter un flux continu d'un latex d'un premier élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

**4.** Composition selon l'une quelconque des revendications 1 à 3, dans la fraction pondérale du premier élastomère diénique dans la matrice élastomérique est supérieure ou égale à 50%.

**5.** Composition selon l'une quelconque des revendications 1 à 4, dans laquelle le premier élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

**6.** Composition selon la revendication 5, dans laquelle le premier élastomère diénique est un caoutchouc naturel.

**7.** Composition selon l'une quelconque des revendications 1 à 6, dans laquelle le deuxième élastomère est un élastomère diénique.

**8.** Composition selon la revendication 7, dans laquelle le deuxième élastomère est choisi dans le groupe constitué par les polybutadiènes, le caoutchouc naturel, les polyisoprènes de synthèse, les copolymères de butadiène, les copolymères d'isoprène et les mélanges de ces élastomères.

**9.** Composition selon l'une quelconque des revendications 1 à 8, dans laquelle la charge inorganique est une silice ou un noir de carbone recouvert de silice.

**10.** Composition selon la revendication 1, dans laquelle le taux de noir de carbone est compris entre 30 et 80, de préférence entre 40 et 70 et le taux de charge inorganique est compris entre 5 e 50 pce, de préférence entre 10 et 30 pce.

**11.** Procédé pour obtenir une composition à base d'au moins un élastomère diénique, une charge renforçante comprenant au moins du noir de carbone et une charge inorganique, c'est-à-dire toute charge inorganique ou minérale, quelles que soient sa couleur et son origine par opposition au noir de carbone, avec un taux de charge inorganique inférieur ou égale à 50 parties en poids pour cent parties d'élastomère qui comprend les étapes suivantes :

- préparer un premier mélange maître comprenant l'élastomère diénique et le noir de carbone, ce premier mélange maître présentant une dispersion de la charge renforçante dans la matrice élastomérique ayant une note Z supérieure ou égale à 90,
- incorporer la charge inorganique, le deuxième élastomère et les autres constituants de la composition, à l'exception du système de réticulation, au premier mélange maître dans un mélangeur en malaxant thermomécaniquement le tout jusqu'à atteindre une température maximale comprise entre 130°C et 200°C,
- refroidir l'ensemble à une température inférieure à 100°C,
- incorporer ensuite le système de réticulation,
- malaxer le tout jusqu'à une température maximale inférieure à 120°C.

**12.** Procédé selon la revendication 11, dans lequel la charge inorganique et le deuxième élastomère sont introduits simultanément.

**13.** Procédé selon la revendication 11, dans lequel, la charge inorganique et le deuxième élastomère sont introduits séparément, la charge inorganique étant introduite avant ou après le deuxième élastomère.

**14.** Procédé selon la revendication 12 ou 13, dans lequel l'introduction de la charge inorganique et/ou du deuxième élastomère est décalée dans le temps de quelques dizaines de secondes à quelques minutes par rapport à l'introduction du premier mélange maître dans le mélangeur.

15. Procédé selon l'une quelconque des revendications 11 à 14, dans lequel le premier mélange maître est réalisé en phase liquide à partir d'au moins un latex d'élastomère et d'une dispersion de noir de carbone.

16. Pneumatique ou produit semi-fini comportant au moins une composition selon l'une quelconque des revendications 1 à 10.

## Patentansprüche

1. Kautschukzusammensetzung auf der Basis wenigstens eines Dienelastomers, eines verstärkenden Füllstoffs, der wenigstens Ruß umfasst, und eines anorganischen Füllstoffs, das heißt eines beliebigen anorganischen oder mineralischen Füllstoffs, gleich welcher Farbe und welchen Ursprungs, der von Ruß verschieden ist, mit einem Anteil an anorganischem Füllstoff, der kleiner oder gleich 50 Gewichtsteilen pro hundert Teile Elastomer ist, **dadurch gekennzeichnet, dass** die Zusammensetzung aus einem ersten Masterbatch erhalten wird, das wenigstens ein erstes Dienelastomer und den Ruß umfasst und eine Dispersion des Rußes in der Elastomermatrix mit einer Note Z, wie sie auf den Seiten 7 und 8 der Beschreibung definiert ist, aufweist, welche größer oder gleich 90 ist, zu welchem der anorganische Füllstoff und wenigstens ein zweites Elastomer, das mit dem ersten Elastomer identisch oder von ihm verschieden ist, zugegeben werden.

2. Zusammensetzung nach Anspruch 1, wobei das erste Masterbatch durch Mischen in flüssiger Phase aus einem Latex des ersten Dienelastomers und einer wässrigen Dispersion von Ruß erhalten wird.

3. Zusammensetzung nach Anspruch 2, wobei das erste Masterbatch gemäß den folgenden Verfahrensschritten erhalten wird:

   - Zuführen eines kontinuierlichen Flusses eines Latex eines ersten Dienelastomers in einen Mischungsbereich eines Koagulationsreaktors, der einen lang gestreckten Koagulationsbereich definiert, der sich zwischen dem Mischungsbereich und einem Ausgang erstreckt,
   - Zuführen eines kontinuierlichen Flusses eines einen Füllstoff umfassenden Fluids unter Druck in den Mischungsbereich eines Koagulationsreaktors, um eine koagulierte Mischung zu bilden,
   - Trocknen des zuvor erhaltenen Koagulats, um das erste Masterbatch zurückzugewinnen.

4. Zusammensetzung nach einem der Ansprüche 1 bis 3, in dem Gewichtsanteil des ersten Dienelastomers in der Elastomermatrix größer oder gleich 50 % ist.

5. Zusammensetzung nach einem der Ansprüche 1 bis 4, wobei das erste Dienelastomer aus der Gruppe ausgewählt ist, die aus Polybutadienen, Naturkautschuk, synthetischen Polyisoprenen, Butadien-Copolymeren, Isopren-Copolymeren und Mischungen dieser Elastomere besteht.

6. Zusammensetzung nach Anspruch 5, wobei das erste Dienelastomer Naturkautschuk ist.

7. Zusammensetzung nach einem der Ansprüche 1 bis 6, wobei das zweite Elastomer ein Dienelastomer ist.

8. Zusammensetzung nach Anspruch 7, wobei das zweite Elastomer aus der Gruppe ausgewählt ist, die aus Polybutadienen, Naturkautschuk, synthetischen Polyisoprenen, Butadien-Copolymeren, Isopren-Copolymeren und Mischungen dieser Elastomere besteht.

9. Zusammensetzung nach einem der Ansprüche 1 bis 8, wobei der anorganische Füllstoff ein Siliciumdioxid oder ein mit Siliciumdioxid beschichteter Ruß ist.

10. Zusammensetzung nach Anspruch 1, wobei der Anteil an Ruß zwischen 30 und 80 pce, vorzugsweise zwischen 40 und 70 pce und der Anteil an anorganischem Füllstoff zwischen 5 und 50 pce, vorzugsweise zwischen 10 und 30 pce liegt.

11. Verfahren zum Gewinnen einer Zusammensetzung auf der Basis wenigstens eines Dienelastomers, eines verstärkenden Füllstoffs, der wenigstens Ruß umfasst, und eines anorganischen Füllstoffs, das heißt eines beliebigen

anorganischen oder mineralischen Füllstoffs, gleich welcher Farbe und welchen Ursprungs, der von Ruß verschieden ist, mit einem Anteil an anorganischem Füllstoff, der kleiner oder gleich 50 Gewichtsteilen pro hundert Teile Elastomer ist, welches die folgenden Schritte umfasst:

- Herstellen eines ersten Masterbatch, welches das Dienelastomer und den Ruß umfasst, wobei dieses erste Masterbatch ein Dispersion des verstärkenden Füllstoffs in der Elastomermatrix mit einer Note Z aufweist, die größer oder gleich 90 ist,
- Beimischen des anorganischen Füllstoffs, des zweiten Elastomers und der anderen Bestandteile der Zusammensetzung mit Ausnahme des Vernetzungssystems zu dem ersten Masterbatch in einem Mischer, indem das Ganze thermomechanisch gemischt wird, bis eine maximale Temperatur zwischen 130 °C und 200 °C erreicht wird,
- Abkühlen des Ganzen auf eine Temperatur unter 100 °C,
- anschließend Beimischen des Vernetzungssystems,
- Mischen des Ganzen bis zu einer maximalen Temperatur unter 120 °C.

**12.** Verfahren nach Anspruch 11, wobei der anorganische Füllstoff und das zweite Elastomer gleichzeitig eingebracht werden.

**13.** Verfahren nach Anspruch 11, wobei der anorganische Füllstoff und das zweite Elastomer getrennt eingebracht werden, wobei der anorganische Füllstoff vor oder nach dem zweiten Elastomer eingebracht wird.

**14.** Verfahren nach Anspruch 12 oder 13, wobei die Einbringung des anorganischen Füllstoffs und/oder des zweiten Elastomers bezüglich der Einbringung des ersten Masterbatch in den Mischer zeitlich um einige -zig Sekunden bis einige Minuten versetzt durchgeführt wird.

**15.** Verfahren nach einem der Ansprüche 11 bis 14, wobei das erste Masterbatch in flüssiger Phase aus wenigstens einem Elastomerlatex und einer Dispersion von Ruß hergestellt wird.

**16.** Reifen oder Halbfabrikat, welcher wenigstens eine Zusammensetzung nach einem der Ansprüche 1 bis 10 aufweist.

## Claims

**1.** Rubber composition based on at least one diene elastomer, a reinforcing filler comprising at least carbon black and an inorganic filler, that is to say any inorganic or mineral filler, whatever its colour and its origin in contrast to carbon black, with an inorganic filler content of less than or equal to 50 parts by weight per hundred parts of elastomer, **characterized in that** the composition is obtained from a first masterbatch comprising at least one first diene elastomer and carbon black, and having a dispersion of the carbon black in the elastomeric matrix that has a Z value, as defined in pages 7 and 8 of the description, of greater than or equal to 90, added to which is the inorganic filler and at least one second elastomer, identical to or different from the first elastomer.

**2.** Composition according to Claim 1, in which the first masterbatch is obtained by liquid-phase compounding starting from a latex of the first diene elastomer and an aqueous dispersion of carbon black.

**3.** Composition according to Claim 2, in which the first masterbatch is obtained according to the following process steps:

- feeding a continuous flow of a latex of a first diene elastomer to a mixing zone of a coagulation reactor defining an elongate coagulation zone extending between the mixing zone and an outlet,
- feeding a continuous flow of a fluid comprising a filler under pressure to the mixing zone of a coagulation reactor to form a coagulated mixture,
- drying the coagulum obtained above in order to recover the first masterbatch.

**4.** Composition according to any one of Claims 1 to 3, in which the weight fraction of the first diene elastomer in the elastomeric matrix is greater than or equal to 50%.

**5.** Composition according to any one of Claims 1 to 4, in which the first diene elastomer is selected from the group consisting of polybutadienes, natural rubber, synthetic polyisoprenes, butadiene copolymers, isoprene copolymers and blends of these elastomers.

**6.** Composition according to Claim 5, in which the first diene elastomer is a natural rubber.

**7.** Composition according to any one of Claims 1 to 6, in which the second elastomer is a diene elastomer.

**8.** Composition according to Claim 7, in which the second elastomer is selected from the group consisting of polybutadienes, natural rubber, synthetic polyisoprenes, butadiene copolymers, isoprene copolymers and blends of these elastomers.

**9.** Composition according to any one of Claims 1 to 8, in which the inorganic filler is a silica or a silica-covered carbon black.

**10.** Composition according to Claim 1, in which the content of carbon black is between 30 and 80 pce, preferably between 40 and 70pce , and the content of inorganic filler is between 5 and 50 phr, preferably between 10 and 30 phr.

**11.** Process for obtaining a composition based on at least one diene elastomer, a reinforcing filler comprising at least carbon black and an inorganic filler, that is to say any inorganic or mineral filler, whatever its colour and its origin in contrast to carbon black, with an inorganic filler content of less than or equal to 50 parts by weight per hundred parts of elastomer, which comprises the following steps:

- preparing a first masterbatch comprising the diene elastomer and the carbon black, this first masterbatch having a dispersion of the reinforcing filler in the elastomeric matrix that has a Z value greater than or equal to 90,
- incorporating the inorganic filler, the second elastomer and the other constituents of the composition, with the exception of the crosslinking system, into the first masterbatch in a mixer, everything being kneaded thermomechanically until a maximum temperature of between 130°C and 200°C is reached,
- cooling the combined mixture to a temperature below 100°C,
- subsequently incorporating the crosslinking system,
- kneading everything up to a maximum temperature below 120°C.

**12.** Process according to Claim 11, in which the inorganic filler and the second elastomer are introduced simultaneously.

**13.** Process according to Claim 11, in which the inorganic filler and the second elastomer are introduced separately, the inorganic filler being introduced before or after the second elastomer.

**14.** Process according to Claim 12 or 13, in which the introduction of the inorganic filler and/or of the second elastomer is offset in time by a few tens of seconds to a few minutes relative to the introduction of the first masterbatch into the mixer.

**15.** Process according to any one of Claims 11 to 14, in which the first masterbatch is produced in the liquid phase from at least one elastomer latex and a dispersion of carbon black.

**16.** Tyre or semi-finished product comprising at least one composition according to any one of Claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6048923 A
- EP 1873191 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A

### Littérature non-brevet citée dans la description

- Latex concentrates : properties and composition. **K.F. GASELEY, A.D.T. GORDON ; T.D. PENDLE.** Naturel Rubber Science and Technology. Oxford University Press, 1988
- **C. W. CARR ; 1. M. KOLTHOFF ; E. J. MEEHAN.** Journal of Polymer Science. University of Minesota, 1950, vol. V, 201-206
- JOURNAL OF POLYMER SCIENCE. 1951, vol. VI, 73-81
- *Industrial and Engineering Chemistry,* 1948, vol. 40 (5), 932-937
- **E. J. VANDENBERG ; G. E. HULSE.** Industrial and Engineering Chemistry. Hercules Powder Company, 1954, vol. 46, 1065-1073